# NEUE EUROPÄISCHE PATENTSCHRIFT

(11) **EP 2 141 979 B2**
(45) Veröffentlichungstag und Bekanntmachung des Hinweises auf die Entscheidung über den Einspruch: **14.08.2019**
(45) Hinweis auf die Patenterteilung: 04.06.2014
(21) Anmeldenummer: 08749297.1
(22) Anmeldetag: 02.05.2008
(51) Int. Cl.: B60P 7/135, A01D 90/08, B62D 33/03

(54) **TRANSPORTWAGEN FÜR INSBESONDERE LANDWIRTSCHAFTLICHES STÜCKGUT**
TRANSPORT WAGON PARTICULARLY FOR AGRICULTURAL CARGO
CHARIOT TRANSPORTEUR, EN PARTICULIER POUR MARCHANDISES DE DÉTAIL AGRICOLES

(30) Priorität: 03.05.2007 DE 102007020735
(43) Veröffentlichungstag der Anmeldung: 13.01.2010
(73) Patentinhaber: GREEN FARMING GmbH, 33813 Oerlinghausen (DE)
(72) Erfinder: Krassort, Georg, 33428 Harsewinkel/Greffen (DE)
(74) Vertreter: Busse & Busse
(86) Internationale Anmeldenummer: PCT/EP2008/003551
(87) Internationale Veröffentlichungsnummer: WO 2008/135236

(56) Entgegenhaltungen:
- EP-A- 0 043 178
- DE-A1- 1 555 717
- DE-A1- 1 630 039
- DE-A1- 1 802 040
- DE-U1- 8 021 003
- DE-U1- 20 107 089
- DE-U1- 29 918 642
- GB-A- 1 244 778
- US-A- 2 496 388
- US-A- 6 152 511
- US-B1- 6 537 008

## Beschreibung

Die Erfindung betrifft einen Transportwagen für Stückgut gemäß dem Oberbegriff des Anspruchs 1, wobei derartige Transportwagen außer für Stückgut aus landwirtschaftlichem Erntegut, insbesondere in Form von gepreßten Rundballen, auch für gepreßten Papierabfall, Kunststoffballen o. dgl. Wertstoffe einsetzbar sind.

Gemäß DE 33 12 585 A1 ist ein Transportsystem für in runder oder quaderförmiger Form vorliegende Preßballen vorgesehen, die aus gepreßtem Rauhfutter o. dgl. Erntegut bestehen. Auf einem Transportwagen ist dabei eine Vielzahl von Ballenaufnahmeboxen vorgesehen, die die Rundballen in geordneter Struktur aufnehmen. In diesen Boxen sind die Rundballen einerseits transportierbar und andererseits ist das System so ausgelegt, daß die zu einem Container verbundenen Boxen auch zur Aufbewahrung der Rundballen bis zu deren bestimmungsmäßigen Gebrauch nutzbar sind.

In DE 200 22 895 ist ein als Sammelfahrzeug ausgebildeter Transportwagen vorgesehen, der eine heckseitige Aufnahmevorrichtung für das Stückgut aufweist, von der aus die insbesondere als Silageballen ausgebildeten Teile auf eine durch ortsfeste Seitenwände begrenzte Ladeplattform verlagerbar sind, wobei für diese Verlagerung im Bereich der Ladeplattform eine spezielle Rollenbahn vorgesehen ist. Mit diesen zusätzlichen Bauteilen ist der nutzbare Transportraum nachteilig eingeschränkt.

Bei einer faltbaren Seitenbordwand für Lastfahrzeuge gemäß EP 0 043 178 ist die aus zumindest zwei Plattenteilen bestehende Wand im Bereich eines Gelenkes horizontal geteilt. Die faltbare Verlagerung dieser Plattenteile wird durch ein in einer Vertikalstange geführtes Schubgelenk und ein ortsfest im Bereich der Ladeplattform vorgesehenes Scharnier gesteuert. Eine ähnliche Konstruktion ist in GB 1 244 778 vorgeschlagen, wobei die beiden gelenkig verbundenen Plattenteile im Bereich einer nahe der Ladeplattform verlaufenden, fahrzeugfesten Welle schwenkbar gehalten sind. In US 2,496,388 ist ein Transportfahrzeug für Baumstämme gezeigt, wobei eine Be- und Entladevorrichtung schwenkbar am Fahrgestell gehalten ist. Zur Sicherung der Baumstämme werden seitlich an der Ladeplattform zwei Stützarme angebracht.

Bei einem Lastfahrzeug gemäß DE-A-18 02 040 sind hebe- und senkbare Bordwände vorgesehen. Diese Bordwände wirken mit einer Stützvorrichtung so zusammen, dass der Bereich der Ladefläche zur Seite hin zugemacht werden kann. Damit bilden die seitlich an die Ladefläche anlegbaren Bordwände ein dicht verschließbares Behälter-System.

Die Konstruktion gemäß US-A-6,152,511 zeigt einen Transportwagen, bei dem die oberhalb jeweiliger seitlicher Stützbalken vorgesehenen Seitenwandteile jeweils als um eine horizontale Stützachse in eine Offnungs- und eine Schließstellung verlagerbare Schwencklappen an sich bekannter Gestaltung ausgebildet sind.

Die Erfindung befaßt sich mit dem Problem, einen Transportwagen für landwirtschaftliches Stückgut zu schaffen, womit ein in Anpassung an Vorschriften des Straßenverkehrs maximierbares Stückgut-Volumen aufnehmbar ist, damit hohe Transportleistungen möglich sind und im Bereich der Ladeplattform eine mit geringem Aufwand an unterschiedliche Beladezustände anpaßbare Ladungssicherung erreichbar ist.

Die Erfindung löst diese Aufgabe durch einen Transportwagen mit den Merkmalen des Anspruchs 1. Weitere vorteilhafte Ausgestaltungen ergeben sich aus den Ansprüchen 2 bis 17.

Der mit in Öffnungsstellung verlagerbaren Seitenwänden versehene Transportwagen weist in erfindungsgemäßer Ausführung im Bereich zumindest einer der Längsseitenwände eine verbesserte Stützvorrichtung auf, mit deren einen Antrieb aufweisenden Hubgestänge das eine mehrlagige Stapelung bildende Stückgut von der Längsseitenwand so erfaßbar ist, daß eine zusätzliche seitliche Klemm-Fixierung erreicht ist. Durch eine variabel steuerbare Schwenk-Hub-Bewegung kann insbesondere die obere Lage des Stapels positionsgenau erfaßt und seitlich gepreßt werden, so daß damit bei einer für den Straßenverkehr zulässigen maximalen Ladungshöhe auf der Ladeplattform eine größere Stabilität der Stapelung erreicht ist und Gefährdungen sowie Ladungsverluste vermeidbar sind.

Insbesondere sind beide mit der zumindest einen Stützvorrichtung verbundene Längsseitenwände durch eine synchrone Bewegung nach Art eines Klemmgatters an den Stückgütern anlegbar. In dieser Preß- bzw. Klemmlage wird jeweils nur ein Teilbereich der Seitenflächen des mehrlagigen Stapelgutes auf dem Ladewagen erfaßt. In einer oberen Anlagestellung entsteht seitlich im unteren Bereich zwischen Klemmgatter und Ladeplattform ein Freiraum, in dem Teile der Stückgut-Stapel offen und seitlich zugänglich sind. In erfindungsgemäßer Weiterbildung der Klemm-Konstruktion mit den Klemmgattern sind im Bereich des Freiraumes zusätzliche Sicherungselemente vorgesehen. Diese können in zweckmäßiger Ausführung mit den Längsseitenwänden bzw. deren Stützvorrichtung(en) zusammenwirken.

Als Sicherungselemente sind dabei insbesondere flexible Spannteile vorgesehen, die bei Verlagerung des Klemmgatters in die obere Schließposition mitbewegt werden und dabei weitgehend vollständig seitlich an das gestapelte Stückgut anlegbar sind. Damit ist für die unteren Lagen des Stückgutes eine zusätzliche Sicherung erreicht. Mit dieser Ausführung der Sicherungselemente ist es möglich, auch eine über die konstruktiv vorgegebene Breite der Ladeplattform vorstehende Beladung des Transportwagens vorzunehmen, so daß beispielsweise zwei zur Längsmittelebene des Transportwagens parallel aufliegende Stapel von Rundballen o. dgl. Stückgut transportierbar sind und die seitlichen Sicherungselemente eine Verschiebung von Stückgut aus einem der Stapel quer zur Fahrtrichtung auch bei Kurvenfahrten zuverlässig verhindern.

Weitere Einzelheiten und vorteilhafte Ausgestaltungen der Erfindung ergeben sich aus der Zeichnung, in der zwei Ausführungsbeispiele des erfindungsgemäßen Transportwagens dargestellt sind. In der Zeichnung zeigen:
- Fig. 1: eine Rückansicht des erfindungsgemäßen Transportwagens mit in einer oberen Schließstellung befindlichen Längsseitenwänden,
- Fig. 2: eine Seitenansicht des Transportwagens gemäß Fig. 1,
- Fig. 3: eine Seitenansicht einer zweiten Ausführung des Transportwagens mit verlagerbaren Seitenwänden,
- Fig. 4: eine Seitenansicht ähnlich Fig. 3 mit einer dritten Ausführung des Transportwagens,
- Fig. 5: eine Seitenansicht ähnlich Fig. 3 mit einem als Bordwand ausgebildeten Sicherungselement,
- Fig. 6: eine Rückansicht des beladenen Transportwagens gemäß Fig. 6,
- Fig. 7: eine Seitenansicht ähnlich Fig. 5 mit quaderförmigem Stückgut auf der Ladepfattform,
- Fig. 8: eine Seitenansicht ähnlich Fig. 7 mit einer in Längsrichtung mehrteiligen Ausführung der Bordwand, und
- Fig. 9: eine Rückansicht des Transportwagens gemäß Fig. 8.

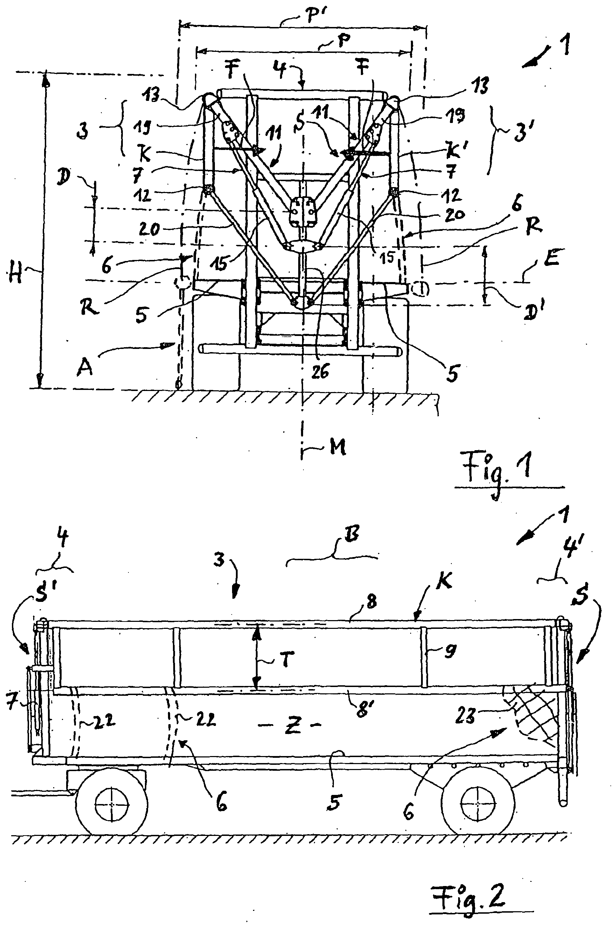

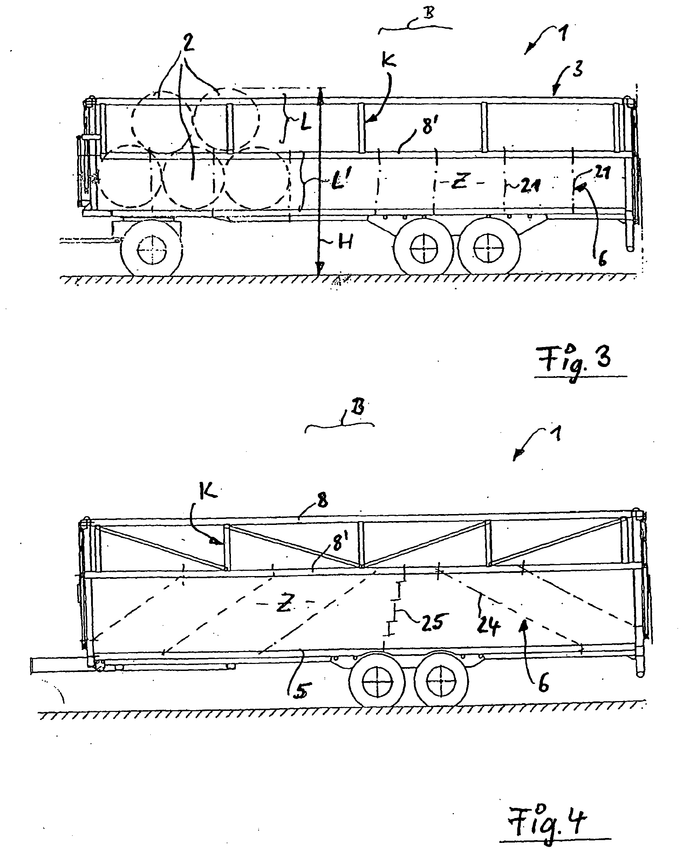

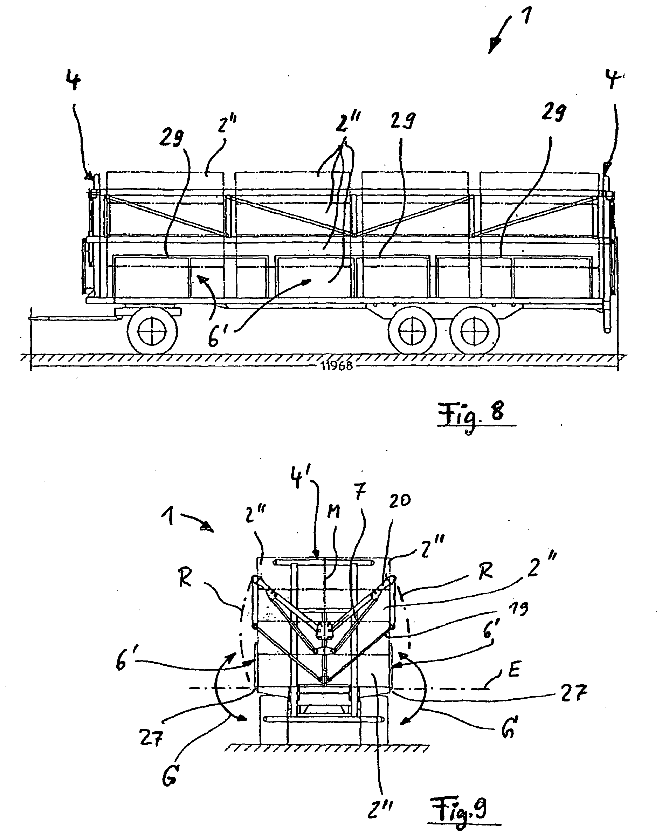

In Fig. 1 ist ein insgesamt mit 1 bezeichneter Transportwagen für landwirtschaftliches Stückgut dargestellt. Auf dessen Ladeplattform 5 kann das Stückgut in Form von aus Stroh, Silage o. dgl. Erntegut gepreßten Rundballen 2 (Fig. 3) aufgenommen werden. Der Transportwagen 1 weist dabei eine das in mehreren Lagen L, L' zum Transport gestapelte Stückgut 2 untergreifenden und von Längs- sowie Querseitenteilen 3, 3'; 4, 4' begrenzte Ladeplattform 5 auf. Der über der Ladeplattform 5 definierte Transportraum ist bei an sich bekannten Transportwagen 1 dadurch zugänglich, daß dessen Längsseitenwände (ähnlich den Wänden 3, 3') seitlich abklappbar sind (ähnlich Position A, Strichdarstellung gemäß Fig. 1 bzw. Pfeil G gemäß Fig. 9).

Erfindungsgemäß ist der Transportwagen 1 im Bereich zumindest einer der Längsseitenwände 3, 3' (in den dargestellten Ausführungen bei beiden Wänden 3, 3') mit einer Stützvorrichtung S versehen, mittels der die Längsseitenwände 3, 3' ausgehend von einer Öffnungsstellung A (beim Beladen) in eine zumindest eine obere Lage L (Fig. 3) des gestapelten Stückgutes 2 erfassende und dieses damit seitlich sichernde Schließstellung (Fig. 2 bis 4: Stellung B) verlagerbar sind (auf einer Bewegungsbahn gemäß Strich-Punkt-Linie R, Fig. 1, Fig. 9).

Eine gewichtsoptimale schmale Ausführung (Breitenmaß: T, Fig. 2) der Längsseitenwände 3, 3' in Leichtbauweise mit wenigen Bauteilen sieht vor, daß diese gitterartigen Wände mittels der Stützvorrichtung S weitgehend vollständig bis unterhalb einer Ebene E der Ladeplattform 5 neben den Transportwagen 1 absenkbar sind und aus dieser Absenkstellung A so hochschwenkbar sind, daß nur die oberste Lage L des mehrlagigen Stückgutes 2 in der dargestellten Schließstellung (Fig. 2 bis 4) von der schmalen Gitterkonstruktion (im Bereich T) direkt erfaßt wird.

Bei diesen Längsseitenwänden 3, 3' ergibt sich jedoch, daß eine Zone Z unterhalb der Längsseitenwände 3, 3' in der Schließstellung "frei bleibt", so daß in diesem Bereich die Gefahr besteht, daß das in einer unteren oder mittleren Lage L' befindliche Stückgut (Fig. 3), beispielsweise bei einer Kurvenfahrt, seitlich herausrutschen kann. Deshalb sieht das erfindungsgemäße Konzept mit auf der Bahn R schwenkbaren Längsseitenwänden 3, 3' auch vor, daß unterhalb der Längsseitenwände 3, 3' jeweils ein zumindest bei mehrlagigem Stückgut L, L' die untere Lage L' zusätzlich erfassendes, allgemein mit 6 bezeichnetes Sicherungselement vorgesehen wird (Fig. 2).

Die Seitenansichten gemäß Fig. 2 bis 4 verdeutlichen diese Kombination, wobei als die Stützvorrichtung S, S' zwei an jeweils einem Ende der Längsseitenwand 3, 3' angreifende Baugruppen zusammenwirken. Diese sind insbesondere im Bereich der jeweiligen Querseitenwand 4, 4' abgestützt (Fig. 2). Denkbar ist, daß diese Baugruppen der Stützvorrichtung S, S' von Hand bedienbar sind. Als zweckmäßig hat es sich jedoch erwiesen, allgemein mit 7, 7' bezeichnete Antriebsorgane an zumindest einer der Baugruppen vorzusehen.

Mit dieser funktionalen Bauteilverbindung S, S' und 7, 7' wird im Bereich der Längsseitenwände 3, 3' ein Schwenk-Klemm-System gebildet, bei dem die mit verwindungssteifen Stangenelementen 8, 8' und 9 versehenen Wände 3, 3' nach Art von jeweiligen Klemmgattern K, K' wirksam werden (Pfeil F, Fig. 1). Diese Klemmgatter K, K' weisen anderenends im Bereich der tragenden Baugruppen der Stützvorrichtung S jeweilige Verbindungsgelenke 12 und 13 auf, wobei ein allgemein mit 11 bezeichnetes Traggestänge mit jeweiligen als Lenkparallelogramm wirksamen Lenkern 19, 20 versehen sind.

Es versteht sich dabei, daß diese Längsseitenwände 3, 3' jeweils vorzugsweise am unteren Rand des Klemmgatters K, K' im Bereich ihrer horizontalen Stange 8' mit den zum Randbereich der Ladeplattform 5 verlaufenden Sicherungselementen 6 versehen sind (Fig. 2 bis 4).

Die Klemmgatter K, K' sind dabei aus der bodennahen Beladestellung (Absenkstellung A, Fig. 1) mittels eines vom Zugfahrzeug (nicht dargestellt) betätigten, als Antriebsorgan 7 vorgesehenen Hydraulikantriebes 15 in eine jeweils vorwählbare Anlagestellung am Stückgut 2 hochschwenkbar. Dabei können die jeweiligen Sicherungselemente 6 so mitbewegt werden, daß das mehrlagig auf der Ladeplattform 5 gestapelte Stückgut 2, insbesondere in Form von Rundballen, in sämtlichen Lagen transportgerecht gesichert wird. Das Antriebskonzept 7 kann dabei so ausgelegt werden, daß die Klemmgitter K, K' und das Sicherungselement 6 mittels der zumindest einen Stützvorrichtung S gemeinsam stufenlos verstellbar sind.

Die Sicherungselemente 6 sind dabei insbesondere in Form von flexiblen Spannteilen vorgesehen. Beispielhaft sind dabei Planen, Seile 21 (Fig. 3), Gurte 22 (Fig. 2) oder Netze 23 (Fig. 2) dargestellt. In Fig. 4 sind mit 24 klappbare Profilteile und mit 25 teleskopierbare bzw. faltbare Elemente als weitere denkbare Ausführungen verdeutlicht. Ebenso ist denkbar, daß die in Spannstellung verbrachten Sicherungselemente 6 nachträglich von Hand einstellbar sind. Die Sicherungselemente 6 können dabei auch mittels eines nicht näher dargestellten Antriebes einzeln oder gemeinsam verstellbar sein.

Die Stirnansicht gemäß Fig. 1 verdeutlicht, daß die beiden als Stützvorrichtung S, S' zusammenwirkenden Bauteilgruppen jeweilige Traggestänge 11 aufweisen, die im wesentlichen spiegelbildlich zur Längsmittelebene M des Transportwagens 1 angeordnet sind. Als Traggestänge 11 sind dabei die jeweils ein Parallelogramm bildenden Lenker 19, 20 vorgesehen und jedem dieser Paare ist ein Hydraulikzylinder 15 als das Antriebsorgan 7 zugeordnet. Die Traggestänge 11 weisen dabei jeweils einen vertikal in der Längsmittelebene M verlaufenden und an den Teilen der Querseitenwände 4, 4' gehaltenen Stützbalken 26 auf, an dem mit entsprechendem Höhenabstand D, D' sowohl die beiden Lenker 19, 20 als auch das hydraulische Antriebsorgan 7 schwenkbar an jeweiligen durch Punkte dargestellten Gelenken gehalten sind. Dieses Stützsystem ist dabei so konzipiert, daß auf einer optimalen Bewegungsbahn R verlagerte Bauteile eine zuverlässige Klemmhalterung des Stückgutes 2 bewirken.

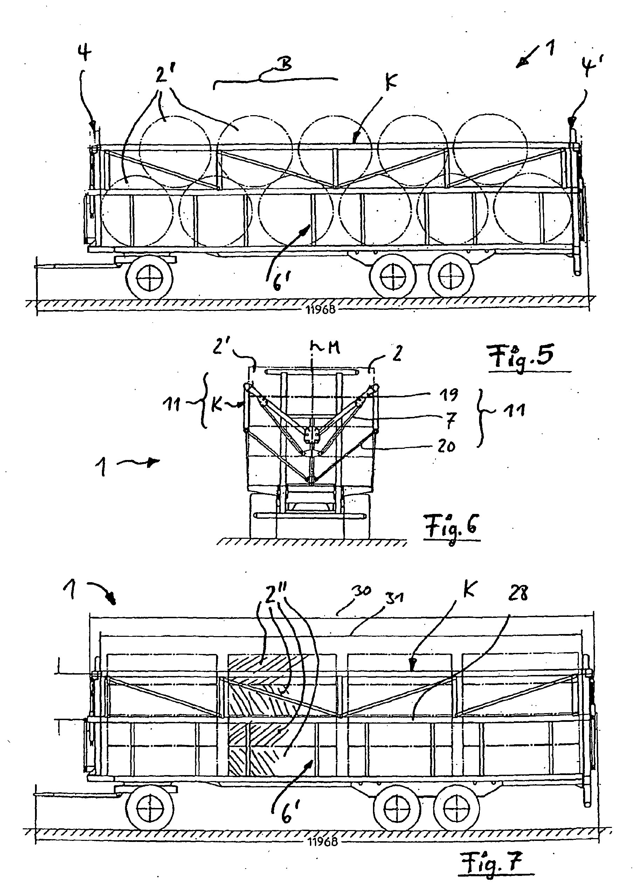

Die von den beiden Klemmgattern K, K' mittels der Stützvorrichtungen S, S' durchlaufene Bewegungsbahn R ist mit einer Bogenlinie verdeutlicht. Mit einem Pfeil H wird ein Maß für eine denkbare maximale Ladehöhe (z. B. 4 m) des Ladewagens 1 angedeutet. Bei einer Leerfahrt des Ladewagens 1 weist dieser eine den Vorschriften des Straßenverkehrs entsprechende Breite P (z. B. 2,55 m) auf und in beladenem Zustand kann das System eine Ladebreite P' (z. B. 3 m) aufweisen, so daß in Fahrtrichtung beidseits der Längsmittelebene M jeweils eine Stapelung von entsprechend langen Stückgütern 2, 2' und 2" (Fig. 6, Fig. 8) möglich ist.

In Fig. 5 ist die Ausführung des Sicherungselementes 6' als eine unabhängig vom Gatter K, K' verlagerbare Bordwand dargestellt, die in Pfeilrichtung G (Fig. 9) um ein entsprechendes Gelenk 27 schwenkbar ist. Diese Bordwand-Sicherung 6' kann dabei als ein Rohrrahmen 28 ausgeführt sein, der von Hand bzw. durch einen Antrieb, einen Kraftspeicher o. dgl. Hilfsmittel (nicht dargestellt) verlagerbar sein kann. Im einfachsten Fall ist das Sicherungselement 6' von Hand bedienbar und in der Schließstellung durch einen Verbinder fixierbar. In der Ausführung gemäß Fig. 8 ist das Sicherungselement 6' aus mehreren in Längsrichtung getrennten Wandelementen 29 gebildet.

Der eine Länge 30 und eine Nutzraumlänge 31 (Fig. 7) aufweisende Transportwagen 1 kann neben dem Transport von unterschiedliche Abmessungen aufweisenden Ballen 2, 2' als Stückgut auch quaderförmige Teile wie Preßbatlen 2", Kisten oder Paletten gesichert aufnehmen. Ebenso ist die Aufnahme von Müllballen, Strohpelletts, gepreßten Sägespänen, Torfballen, Gebinden in Sackform, Papierballen o. dgl. Transportgut denkbar. Eine mehrlagige Stapelung des Stückgutes 2" (Fig. 7, unterschiedliche Schraffur) zeigt die Wirkung des Klemmgatters K im Bereich der oberen Lagen und die unteren Lagen werden durch das jeweilige Sicherungselement 6, 6' erfaßt. Damit ist gewährleistet, daß auch Transportwagen 1 mit einem nur teilweise gefüllten Aufnahmeraum, beispielsweise nur eine untere Lage und wenigen Stückgütern in der zweiten Lage, für den Straßenverkehr und einen verlustfreien Transport hinreichend sicher einsetzbar ist.

## Patentansprüche

1. Transportwagen für Stückgut (2), insbesondere aus landwirtschaftlichem Erntegut wie Stroh oder Silage gepreßten Ballen, mit einer das Stückgut (2) untergreifenden und von Längs- sowie Querseitenteilen (3, 3'; 4, 4') begrenzten Ladeplattform (5), wobei deren Transportraum insbesondere bei geöffneten und mittels einer Stützvorrichtung (S, S') in eine bodennahe Öffnungsstellung (A) abgesenkten Längsseitenwänden (3, 3') zugänglich ist, **dadurch gekennzeichnet, daß** die zumindest eine mit der Stützvorrichtung (S, S') verlagerbare Längsseitenwand (3, 3') in eine eine Ladehöhe (H) oberhalb der Ladeplattform (5) definierende, zu dieser einen als freie Zone (Z) einen Abstand aufweisende, zumindest eine obere Lage (L) des gestapelten Stückgutes (2, 2', 2") erfassende und dieses seitlich als ein Schwenk-Klemm-System sichernde (Pfeil F) Schließstellung (B) hochschwenkbar (Pfeil R) ist, wobei mit dem einen Antrieb (7, 7') aufweisenden Hubgestänge der Stützvorrichtung (S, S') das eine mehrlagige Stapelung bildende Stückgut (2, 2', 2") von der Längsseitenwand (3, 3') so erfassbar ist, dass eine seitliche Klemm-Fixierung erreicht ist.

2. Transportwagen nach Anspruch 1, **dadurch gekennzeichnet, daß** zumindest eine der Längsseitenwände (3, 3') mittels der Stützvorrichtung (S, S') weitgehend vollständig bis unterhalb der Ebene (E) der Ladeplattform (5) neben diese absenkbar ist und aus einer Absenkstellung (A) in eine nur die oberste Lage (L) des mehrlagigen Stückgutes (2, 2', 2") erfassende Schließstellung hochschwenkbar (Linie R) ist.

3. Transportwagen nach Anspruch 1 oder 2, **dadurch gekennzeichnet, daß** die Längsseitenwand (3, 3') mit zumindest einem bei mehrlagigem Stückgut (2, 2', 2") die untere(n) Lage(n) (L') zusätzlich sichernden Sicherungselement (6, 6') zusammenwirkt.

4. Transportwagen nach einem der Ansprüche 1 bis 3, **dadurch gekennzeichnet, daß** als die Stützvorrichtung (S, S') zwei an jeweils einem Ende der Längsseitenwand (3, 3') angreifende Baugruppen zusammenwirken und diese im Bereich der jeweiligen Querseitenwand (4, 4') abgestützt sind.

5. Transportwagen nach Anspruch 3 oder 4 nur wenn abhängig von Anspruch 3, **dadurch gekennzeichnet, daß** das Sicherungselement (6, 6') von Hand oder mittels zumindest eines Antriebsorgans (7) bedienbar ist.

6. Transportwagen nach einem der Ansprüche 1 bis 5, **dadurch gekennzeichnet, daß** als Längsseitenwände (3, 3') jeweilige mit verwindungssteifen Stangenelementen (8, 8', 9) ausgebildete Klemmgatter (K, K') vorgesehen sind und diese im Bereich der endseitigen Stützvorrichtung (S, S') ein jeweiliges Traggestänge (11) aufweisen.

7. Transportwagen nach den Ansprüchen 6 und 3, **dadurch gekennzeichnet, daß** die Längsseitenwände (3, 3') jeweils am unteren Rand des Klemmgatters (K, K') das zum Randbereich der Ladeplattform (5) verlaufende Sicherungselement (6) aufweisen.

8. Transportwagen nach einem der Ansprüche 6 bis 7 und 3, **dadurch gekennzeichnet, daß** das Klemmgatter (K, K') aus der bodennahen Beladestellung (A) mittels eines Hydraulikantriebes (15) in einstellbare Anlagestellungen am Stückgut (2) hochschwenkbar, dabei das Sicherungselement (6) mitbewegbar und so das mehrlagig (L, L') auf der Ladeplattform (5) gestapelte Stückgut (2), insbesondere in Form von Rundballen, transportgerecht gesichert ist.

9. Transportwagen nach einem der Ansprüche 6 bis 8 und 3, **dadurch gekennzeichnet, daß** das Klemmgatter (K, K') und das Sicherungselement (6) mittels der Stützvorrichtung (S, S') stufenlos verstellbar sind, derart, daß die jeweilige Anlagestellung an entsprechend der Größe des Stückgutes (2) variierende Klemmbedingungen anpaßbar ist.

10. Transportwagen nach einem der Ansprüche 3 bis 9 nur wenn abhängig von Anspruch 3, **dadurch gekennzeichnet, daß** das Sicherungselement (6) aus flexiblen Spannteilen wie Planen, Seile (21), Gurte (22), Netze (23) o. dgl. gebildet ist.

11. Transportwagen nach einem der Ansprüche 3 bis 10 nur wenn abhängig von Anspruch 3, **dadurch gekennzeichnet, daß** das Sicherungselement (6) von Hand einstellbar und fixierbar ist.

12. Transportwagen nach einem der Ansprüche 3 bis 11 nur wenn abhängig von Anspruch 3, **dadurch gekennzeichnet, daß** das Sicherungselement (6) mittels eines Antriebs verstellbar ist.

13. Transportwagen nach einem der Ansprüche 6 bis 12 und 3, **dadurch gekennzeichnet, daß** das Sicherungselement (6') als eine unabhängig vom Klemmgatter (K, K') verlagerbare Bordwand ausgebildet ist.

14. Transportwagen nach Anspruch 13, **dadurch gekennzeichnet, daß** die Bordwand (6') von Hand klappbar ist.

15. Transportwagen nach einem der Ansprüche 6 bis 14 nur wenn abhängig von Anspruch 6, **dadurch gekennzeichnet, daß** die beiden als Stützvorrichtung (S, S') zusammenwirkenden Traggestänge (11) im Wesentlichen spiegelbildlich zur Längsmittelebene (M) des Transportwagens (1) angeordnete Bauteile aufweisen.

16. Transportwagen nach den Ansprüchen 15 und 5, **dadurch gekennzeichnet, daß** als Traggestänge (11) jeweils zwei ein Parallelogramm bildende Führungsstreben (19, 20) vorgesehen sind und jedem Paar der Führungsstreben (19, 20) ein Hydraulikzylinder (15) als das Antriebsorgan (7) zugeordnet ist.

17. Transportwagen nach Anspruch 16, **dadurch gekennzeichnet, daß** die Traggestänge (11) jeweils mit einem vertikal in der Längsmittelebene (M) verlaufenden Stützbalken (26) versehen sind, an dem mit entsprechendem Höhenabstand (D, D') sowohl die beiden Führungsstreben (19, 20) als auch das Antriebsorgan (7) schwenkbar gehalten sind.

## Claims

1. Transport wagon for cargo (2), in particular compressed bales of agricultural crops such as straw or silage, said transport wagon comprising a loading platform (5) which supports the cargo (2) from below and is delimited by longitudinal and transverse side parts (3, 3'; 4, 4'), the transport space thereof being accessible via longitudinal sidewalls (3, 3'), in particular when said longitudinal sidewalls are open and have been lowered into an open position (A) near the ground by means of a support device (S, S'), **characterised in that** the at least one longitudinal sidewall (3, 3'), which can be displaced by the support device (S, S'), is pivotable upwards (arrow R) into a closed position (B) which defines a loading height (H) above the loading platform (5), is at a spacing from said platform forming a free zone (Z), grips at least an upper layer (L) of the stacked cargo (2, 2' 2"), and laterally secures (arrow F) said cargo as a pivot-clamp system, so that with an arrangement of lifting rods with a drive system for the support device the multi-layered stacked cargo (2, 2', 2") is seized by the longitudinal sidewalls (3, 3'), that a lateral clamping fixation is achieved .

2. Transport wagon according to claim 1, **characterised in that** at least one of the longitudinal sidewalls (3, 3') is almost completely lowerable until underneath a plane (E) and besides of the loading platform (5) and is pivotable upwards (line R), by means of the support device (S, S'), out of a lowered position (A) into a closed position which only grips the uppermost layer (L) of the multilayer cargo (2, 2', 2").

3. Transport wagon according to either claim 1 or claim 2, **characterised in that** the longitudinal sidewall (3, 3') interacts with at least one securing element (6, 6') which, in the case of multilayer cargo (2, 2', 2"), additionally secures the lower layer or layers (L').

4. Transport wagon according to any of claims 1 to 3, **characterised in that** two assemblies, each engaging at one end of the longitudinal sidewall (3, 3'), interact as the support device (S, S') and these assemblies are supported in the region of the respective transverse sidewalls (4, 4').

5. Transport wagon according to either claim 3 or claim 4 when dependent on claim 3, **characterised in that** the securing element (6, 6') can be operated by hand or by at least one drive member (7).

6. Transport wagon according to any of claims 1 to 5, **characterised in that** clamping gates (K, K'), each formed by torsion-resistant rod elements (8, 8', 9), are provided as the longitudinal sidewalls (3, 3') and these clamping gates each have a supporting linkage (11) in the region of the end support device (S, S').

7. Transport wagon according to claims 6 and 3, **characterised in that** the longitudinal sidewalls (3, 3') each have, on the lower edge of the clamping gate (K, K'), the securing element (6) which extends to the edge region of the loading platform (5).

8. Transport wagon according to any of claims 6, 7 and 3, **characterised in that** the clamping gate (K, K') is pivotable upwards, by means of a hydraulic drive (15), out of the loading position (A) near the ground into adjustable contact positions on the cargo (2), it being possible for the securing element (6) to be entrained, and the cargo (2), which is stacked in several layers (L, L') on the loading platform (5), in particular in the form of round bales, thus being properly secured for transport.

9. Transport wagon according to any of claims 6 to 8, and to claim 3, **characterised in that** the clamping gate (K, K') and the securing element (6) are continuously adjustable by means of the support device (S, S'), such that the respective contact position can be adapted to clamping conditions which vary in accordance with the size of the cargo (2).

10. Transport wagon according to any of claims 3 to 9, only if dependent on claim 3, **characterised in that** the securing element (6) is formed of flexible tensioning parts such as tarpaulins, ropes (21), straps (22), nets (23), or the like.

11. Transport wagon according to any of claims 3 to 10, only if dependent on claim 3, **characterised in that** the securing element (6) is adjustable and fixable by hand.

12. Transport wagon according to any of claims 3 to 11, only if dependent on claim 3, **characterised in that** the securing element (6) is adjustable by means of a drive.

13. Transport wagon according to any of claims 6 to 12, and to claim 3, **characterised in that** the securing element (6') is formed as an edge wall that is movable independent of the clamping gate (K, K').

14. Transport wagon according to claim 13, **characterised in that** the edge wall (6') is foldable by hand.

15. Transport wagon according to any of claims 6 to 14, only if dependent on claim 6, **characterised in that** the two supporting linkages (11), interacting as the support device (S, S'), are components arranged substantially mirror-symmetrically to the longitudinal centre plane (M) of the transport wagon (1).

16. Transport wagon according to claims 15 and 5, **characterised in that** two guide rods (19, 20), which form a parallelogram, are provided in each case as the supporting linkage (11) and each pair of guide rods (19, 20) is assigned a hydraulic cylinder (15) as the drive member (7).

17. Transport wagon according to claim 16, **characterised in that** the supporting linkages (11) are each provided with a support beam (26) which extends vertically in the longitudinal centre plane (M) and on which the two guide rods (19, 20) and the drive member (7) are pivotally held at an appropriate vertical spacing (D, D').

## Revendications

1. Chariot transporteur de transport de charge isolée (2), en particulier des balles pressées à partir de produits de récolte agricoles tels que de la paille ou du fourrage ensilé, le chariot comprenant une plateforme de chargement (5) s'engageant sous la charge isolée (2) et délimitée par des parties latérales longitudinales ainsi que transversales (3, 3' ; 4, 4'), l'espace de transport de ladite plateforme étant accessible en particulier lorsque les parois latérales longitudinales (3, 3') sont ouvertes et abaissées dans une position d'ouverture (A) proche du sol à l'aide d'un dispositif de support (S, S'), **caractérisé en ce que** l'au moins une paroi latérale longitudinale (3, 3'), pouvant se déplacer avec le dispositif de support (S, S'), peut être pivotée en hauteur (flèche R) dans une position de fermeture (B) définissant une hauteur de chargement (H) au-dessus de la plateforme de chargement (5), présentant par rapport à cette plateforme de chargement une distance servant de zone libre (Z), saisissant au moins une couche supérieure (L) de la charge isolée (2, 2', 2") empilée et bloquant celle-ci latéralement à la manière d'un système de pivotement et de serrage (flèche F),
la charge isolée (2, 2', 2"), qui forme un empilement multicouches pouvant être saisie par la paroi latérale longitudinale (3, 3') au moyen d'une barre de levage, pourvue d'un entraînement (7, 7') du dispositif de support (S, S') de manière à atteindre une fixation par serrage latérale

2. Chariot transporteur selon la revendication 1, **caractérisé en ce que** l'une au moins des parois latérales longitudinales (3, 3') peut être abaissée au moyen du dispositif de support (S, S') pratiquement complètement jusqu'au-dessous du plan € de la plateforme de chargement (5) à côté de celle-ci et peut être pivotée en hauteur (ligne R) depuis une position d'abaissement (A) à une position de fermeture saisissant seulement la couche supérieure (L) de la charge isolée multicouches (2, 2', 2").

3. Chariot transporteur selon la revendication 1 ou 2, **caractérisé en ce que** la paroi latérale longitudinale (3, 3') coopère avec au moins un élément de blocage (6, 6') bloquant en outre l'au moins une couche inférieure (L') en cas de charge isolée multicouches (2, 2', 2").

4. Chariot transporteur selon l'une des revendications 1 à 3, **caractérisé en ce que** deux modules, s'engageant chacun au niveau d'une extrémité de la paroi latérale longitudinale (3, 3'), coopèrent comme dispositif de support (S, S') et ces modules sont supportés dans la zone de la paroi latérale transversale respective (4, 4').

5. Chariot transporteur selon la revendication 3 ou 4 seulement si elle dépend de la revendication 3, **caractérisé en ce que** l'élément de blocage (6, 6') peut être manipulé à la main ou à l'aide d'au moins un organe d'entraînement (7).

6. Chariot transporteur selon l'une des revendications 1 à 5, **caractérisé en ce que** des grilles de serrage (K, k') respectives, réalisées avec des éléments formant tige (8, 8', 9) rigides à la torsion, sont prévues comme parois latérales longitudinales (3, 3') et ces grilles de serrage comportent dans la zone du dispositif de support côté extrémité (S, S') une tringle porteuse (11) respective.

7. Chariot transporteur selon les revendications 1 et 3, **caractérisé en ce que** les parois latérales longitudinales (3, 3') comportent chacune, sur le bord inférieur de la grille de serrage (K, K'), l'élément de blocage (6) s'étendant vers la zone de bord de la plateforme de chargement (5).

8. Chariot transporteur selon l'une des revendications 6 à 7 et 3, **caractérisé en ce que** la grille de serrage (K, K') peut être pivotée vers le haut de la position de chargement (A) proche du sol dans des positions d'appui réglables au niveau de la charge isolée (2) à l'aide d'un entraînement hydraulique (15), l'élément de blocage (6) peut être déplacé en même temps et ainsi la charge isolée (2) empilée sur plusieurs couches (L, L') sur la plateforme de chargement (5) est bloquée de manière adaptée au transport en particulier sous la forme de balles rondes.

9. Chariot transporteur selon l'une des revendications 6 à 8 et 3, **caractérisé en ce que** la grille de serrage (K, K') et l'élément de blocage (6) sont réglables en continu à l'aide du dispositif de support (S, S') de telle manière que la position d'appui respective puisse être adaptée aux conditions de serrage variant selon la grandeur de la charge isolée (2).

10. Chariot transporteur selon l'une des revendications 3 à 9 seulement si elle dépend de la revendication 3, **caractérisé en ce que** l'élément de blocage (6) est formé par des parties de serrage flexibles telles que des bâches, des câbles (21), des sangles (22), des filets (23) ou similaires.

11. Chariot transporteur selon l'une des revendications 3 à 10 seulement si elle dépend de la revendication 3, **caractérisé en ce que** l'élément de blocage (6) est réglable et fixable à la main.

12. Chariot transporteur selon l'une des revendications 3 à 11 seulement si elle dépend de la revendication 3, **caractérisé en ce que** l'élément de blocage (6) est réglable à l'aide d'un entraînement.

13. Chariot transporteur selon l'une des revendications 6 à 12 et 3, **caractérisé en ce que** l'élément de blocage (6') est réalisé comme une paroi de bord déplaçable indépendamment de la grille de serrage (K, K').

14. Chariot transporteur selon la revendication 13, **caractérisé en ce que** la paroi de bord (6') est rabattable à la main.

15. Chariot transporteur selon l'une des revendications 6 à 14 seulement si elle dépend de la revendication 6, **caractérisé en ce que** les deux tringles porteuses (11) coopérant comme dispositif de support (S, S') comportent des modules disposés sensiblement à symétrie de miroir par rapport au plan médian longitudinal (M) du chariot transporteur (1).

16. Chariot transporteur selon les revendications 15 et 5, **caractérisé en ce que** deux entretoises de guidage (19, 20) formant un parallélogramme sont chacune prévues comme tringles porteuses (11) et un vérin hydraulique (15) est associé à chaque paire d'entretoises de guidage (19, 20) comme organe d'entraînement (7).

17. Chariot transporteur selon la revendication 16, **caractérisé en ce que** les tringles porteuses (11) sont pourvues chacune d'une barre de support (26) qui s'étend verticalement dans le plan médian longitudinal (M) et au niveau de laquelle les deux entretoises de guidage (19, 20) ainsi que l'organe d'entraînement (7) sont maintenus de manière pivotante avec une distance verticale correspondante (D, D').
